# FASCICULE DE BREVET EUROPEEN

(11) **EP 2 436 943 B1**
(45) Date de publication et mention de la délivrance du brevet: **16.09.2020**
(21) Numéro de dépôt: 11181689.8
(22) Date de dépôt: 16.09.2011
(51) Int. Cl.: F16C 35/07, F16C 19/52

(54) **Dispositif de protection d'un palier à roulement**
Schutzvorrichtung für ein Wälzlager
Rolling bearing protection device

(30) Priorité: 01.10.2010 FR 1057988
(43) Date de publication de la demande: 04.04.2012
(73) Titulaire: ALSTOM Transport Technologies, 93400 Saint-Ouen (FR)
(72) Inventeur: Laitem, Claude, 25290 Chassagne Saint Denis (FR); Tripot, Gérard, 25440 Chenecey-Buillon (FR)
(74) Mandataire: Lavoix

(56) Documents cités:
- CN-Y- 201 013 765
- GB-A- 2 231 447
- JP-B- 3 868 529
- US-A- 5 735 615
- US-A- 5 961 222

## Description

La présente invention concerne un palier à roulements, apte à être utilisé pour toute machine tournante nécessitant un guidage en rotation de parties tournantes par palier à roulements. Elle trouve plus particulièrement application dans les paliers à roulement pour moteurs électriques. Il peut s'agir, par exemple, de moteurs de traction de véhicule guidé, tel qu'un véhicule ferroviaire.

Les paliers à roulement (ci-après également désignés sous le terme de « roulements » ou de « paliers » par soucis de concision) sont soumis à des dégradations dues au passage de courants électriques de fuite. Ces courants de fuite peuvent résulter, notamment, de la dissymétrie dans la structure des circuits magnétiques du moteur ou de l'alimentation du moteur par des onduleurs. Lorsque les courants sont générés par des dissymétries du circuit magnétique, les courants qui traversent les roulements ont des fréquences basses, de quelques kHz. Lorsque les moteurs sont alimentés par des onduleurs, les courants de fuite ont des fréquences plus élevées, pouvant atteindre 100kHz voire quelques MHz. Ces deux types de courant de fuite peuvent être simultanément présents dans les moteurs.

Il est nécessaire de protéger les roulements vis-à-vis de ces courants de fuite, car ces courants créent des arcs électriques entre les éléments roulants et les pistes des bagues du roulement. Ces arcs entraînent une dégradation prématurée du palier, selon un processus similaire au soudage à l'arc électrique, en générant de fortes élévations de températures localisées: ils endommagent ainsi le lubrifiant du palier et/ou les zones de contact entre éléments tournants et pistes.

Une solution connue pour protéger les roulements de ces courants de fuite consiste à isoler électriquement la bague intérieure ou extérieure du roulement par ajout d'une couche de diélectrique du type céramique, en alumine par exemple. Cette solution est cependant plus efficace pour les courants basse fréquence que pour les courants haute fréquence. En outre, du fait de sa relative fragilité, cette couche en céramique peut rendre plus délicat le montage des paliers à roulements.

On connaît également du document GB2231447A un dispositif de protection, vis à vis des courants électriques de fuite, d'un palier à roulement destiné à être monté sur un arbre d'un moteur électrique. On connaît également du document CN201013765Y un dispositif de protection comme décrit dans le préambule de la revendication 1 annexée.

L'invention a alors pour but de remédier au moins en partie aux inconvénients de cette solution connue. Elle a notamment pour but d'éviter ou de ralentir l'usure prématurée des paliers à roulement, notamment due aux courants électriques de fuite.

L'invention a tout d'abord pour objet un dispositif de protection, notamment thermique et/ou vis-à-vis des courants électriques de fuite, d'un palier à roulement destiné à être monté sur un arbre d'un moteur électrique. Ce dispositif de protection comprend une bague qui est interposée entre l'arbre et le palier à roulement et qui est isolée de l'arbre par un revêtement diélectrique.

Cette bague additionnelle permet d'isoler électriquement le palier de l'arbre, ce qui préserve le roulement des courants de fuite provenant de l'arbre sans avoir à modifier la conception des roulements standards. Elle s'avère efficace aussi bien à l'encontre des courants haute fréquence que des courants basse fréquence, car elle peut être ajustée, indépendamment du roulement qui reste inchangé, pour assurer une isolation suffisante à l'encontre des deux types de courant de fuite habituellement rencontrés. En outre, cette isolation électrique se double généralement d'une isolation thermique, qui participe à réduire tout risque d'échauffement du palier par transmission de chaleur via l'arbre, ce qui est également source d'usure prématurée.

De préférence, la bague est à base de titane ou d'alliage au titane. Il a en effet été observé que ce type de métal présentait des propriétés différentes de celles, par exemple, de l'acier (qui est généralement constitutif des arbres), ce qui apportait des avantages sur deux plans au moins :
D'une part, le titane présentant un coefficient de conductivité thermique au moins trois fois inférieur à celui de l'acier (environ 21,6 W/m.K pour le titane versus environ 71 W/m.K pour l'acier), ce qui contribue encore à réduire la transmission de chaleur de l'arbre au roulement.

D'autre part, le choix du titane (ou de l'un de ses alliages comprenant majoritairement du titane) améliore la qualité de la liaison frettée entre l'arbre et la bague en prenant en compte la vitesse et l'échauffement, car le coefficient de dilatation thermique du titane est significativement inférieur à celui de l'acier (environ 8,5.10-6 K-1 pour le titane versus 12,2.10-6 K-1 pour l'acier) et sa densité bien moindre (la densité du titane est environ 60% inférieure à celle de l'acier).

Enfin, il est préférable que le matériau retenu pour la bague présente une tenue mécanique supérieure ou égale à celle de l'acier, ce qui est également le cas du titane.

Selon une première variante de l'invention, la bague est isolée électriquement de l'arbre par un revêtement en matériau isolant (diélectrique) couvrant au moins la surface de la bague destinée à être en contact avec l'arbre.

Selon une deuxième variante de l'invention, cumulable avec la première, la bague est isolée électriquement de l'arbre par un revêtement isolant (diélectrique) disposé sur la surface extérieure de l'arbre au moins dans sa zone destinée à être en contact avec la bague.

Le revêtement isolant peut ainsi se trouver sur la bague, sur l'arbre (variante faisant pas partie de l'invention), ou sur les deux à la fois dans leur zone de contact mutuel.

De préférence, le ou chaque revêtement isolant est un revêtement en céramique, notamment en oxyde métallique, en nitrure métallique ou en nitrure de silicium. Par exemple, il peut s'agir d'oxyde d'aluminium, d'oxyde de titane, de nitrure de silicium ou un mélange d'au moins deux de ces composés.

On peut, par exemple, utiliser un procédé de dépôt par projection plasma pour déposer le ou les revêtements isolants.

L'invention prévoit des moyens de maintien et de positionnement relatif entre la bague et l'arbre et entre la bague et le roulement.

Ainsi, selon un mode de réalisation, la bague présente une face d'extrémité apte à venir en butée sur un épaulement de l'arbre, ce qui permet de caler la bague longitudinalement par rapport à l'arbre autour duquel elle est disposée. Et la bague peut être bloquée en position sur l'arbre (une fois calée/positionnée correctement) par emmanchement à force (ou tout autre moyen mécanique).

Selon une variante, la bague est également isolée électriquement de la ou des pièces métalliques (conductrices électriquement et/ou thermiquement) en contact avec l'arbre A par le revêtement isolant dans sa zone destinée à être en contact avec ladite ou les dites pièces mécaniques.

L'invention a également pour objet un arbre d'un moteur électrique sur lequel est monté un palier à roulement équipé du dispositif de protection décrit précédemment.

L'invention a également pour objet un moteur électrique comportant un arbre sur lequel est monté un palier à roulement équipé du dispositif de protection décrit précédemment.

La bague interposée entre l'arbre et le palier à roulement peut être isolée de l'arbre par un revêtement isolant sur la surface extérieure de l'arbre au moins dans sa zone destinée à être en contact avec la bague.

Dans ce cas de figure, le revêtement isolant recouvre aussi de préférence
- un épaulement de l'arbre contre lequel une face d'extrémité de la bague est apte à venir en butée, et/ou
- la surface extérieure de l'arbre destinée à entrer en contact avec une ou des pièces métalliques du palier.

Il est à noter que toutes les indications de disposition dans l'espace, de type « supérieur », « inférieur », « latéral », « horizontal » ou « vertical » se comprennent en considérant un arbre arbitrairement représenté en disposition horizontale, et ne limitent pas l'invention à cette configuration.

D'autres caractéristiques et avantages de l'invention apparaîtront plus clairement à la lumière de la description qui va suivre et des dessins annexés, concernant un mode de réalisation particulier, non limitatif, en référence aux figures suivantes qui représentent:
Ces figures sont très schématiques et ne respectent pas nécessairement l'échelle entre les différents composants représentés afin d'en faciliter la lecture. Les mêmes composants portent les mêmes références dans l'ensemble des figures. Tous les composants ne sont pas nécessairement représentés ou décrits en détails, seuls ceux important à l'invention le sont.

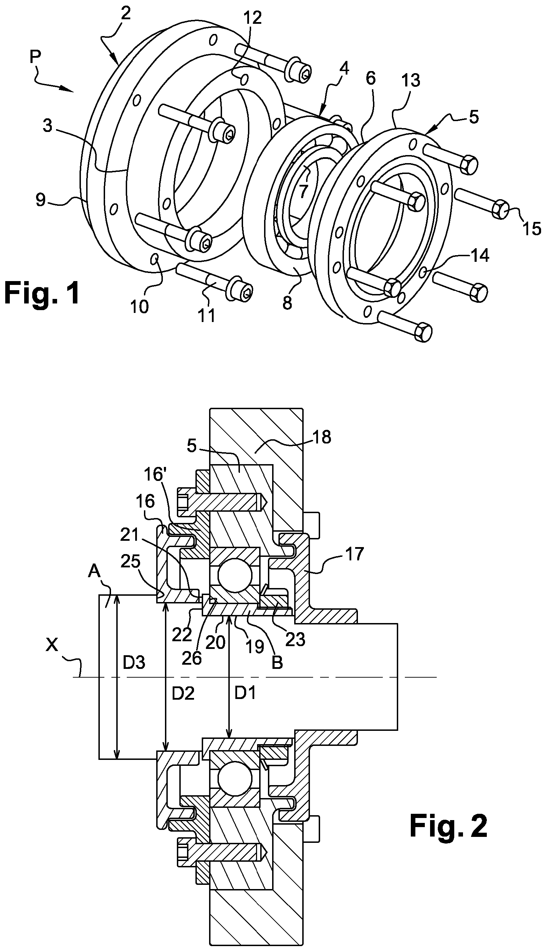

La figure 1 représente un exemple de palier à roulement connu standard P, qui comporte un boîtier 2 de palier comprenant un corps cylindrique 3, un roulement 4 disposé à l'intérieur du corps cylindrique 3 et un couvercle 5 comprenant un corps cylindrique 6 s'insérant dans le corps cylindrique 3 du boîtier de palier et prenant appui sur le roulement 4. Le roulement 4 est ici du type à billes mais peut être d'un autre type (rouleaux par exemple). La bague intérieure 7 est solidaire d'un arbre tournant A (représenté à la figure 2), tandis que la bague extérieure 8 est solidaire du boîtier 2 de palier, qui est fixe. Le boîtier 2 comprend une collerette de butée 9 dans laquelle des trous lisses 10 sont percés axialement. Il peut être fixé à une partie fixe d'une machine tournante au moyen de vis et rondelles de fixation 11, traversant les alésages 10 et des alésages complémentaires réalisés sur la partie fixe de la machine tournante. Le corps cylindrique 3 du boîtier comporte également des trous taraudés axiaux 12. Le couvercle 5 comprend une collerette de butée 13, percée d'alésages axiaux 14. Lorsque le couvercle et le boîtier sont assemblés, la collerette de butée 13 du couvercle 5 bute contre l'extrémité du corps cylindrique 3 du boîtier 2. Le couvercle 5 est fixé au boîtier 2 au moyen de vis de fixation 15 traversant les alésages 14, 12 respectifs du couvercle 5 et du boîtier 2.On peut prévoir un assemblage différent du couvercle au boîtier.

La figure 2 représente ce type de palier P, une fois monté sur l'arbre A (en acier), tournant autour de son axe longitudinal X, associé à un flasque 18 et actionné par un moteur électrique non représenté. Les composants 16,16' d'une part, et 17 d'autre part sont communément appelés déflecteurs, et ont pour rôle, connu en soi, d'assurer l'étanchéité du roulement et le maintien du lubrifiant à l'intérieur de celui-ci, par un système de labyrinthe. Ici, et selon l'invention, le palier P est monté sur l'arbre A par l'intermédiaire d'une bague B. Cette bague présente une surface intérieure 20 cylindrique constante adaptée au diamètre D1 de l'arbre A. Une de ses faces terminales 21 vient coopérer avec un épaulement 22 présent au niveau de la surface extérieure de l'arbre, faisant passer celui-ci d'un diamètre D1 à un diamètre D2 plus grand. La face 21 de la bague B est, dans une version qui ne fait pas partie de l'invention au moins aussi haute que cet épaulement 22, ici selon l'invention elle est plus haute que la différence D2 - D1. Elle vient s'y caler, l'épaulement 22 faisant fonction de butée afin de placer correctement la bague longitudinalement sur l'arbre A. La bague B est bloquée en position par un emmanchement à force autour de l'arbre A.

L'écrou 23 vient bloquer le roulement contre la face 26 de la bague B, sans jamais être en contact direct avec l'arbre, afin d'éviter de créer des ponts électriques (et thermiques) entre l'écrou 23 (généralement métallique) et l'arbre A. A noter également qu'on évite tout contact électrique entre le déflecteur 17 et l'écrou 23.

La bague B est en titane (ou en alliage de titane), et est recouverte sur l'ensemble de sa surface intérieure 20 en contact avec l'arbre A et sur sa face terminale 21 (côté arbre) d'un revêtement 19 à base d'oxyde d'aluminium d'une épaisseur de, par exemple, 100 à 500 micromètres. Ce revêtement 19, disposé à l'interface bague /arbre et supprimant tout contact direct entre les deux composants, vient ainsi isoler électriquement le palier de l'arbre, et le préserver ainsi des courants de fuite passant par l'arbre. A noter que le revêtement est également présent sur la surface de la bague en contact avec le déflecteur 17, c'est-à-dire sur la surface de la face arrière de la bague (par opposition à sa face avant 21), ce qui permet d'éviter le passage de courant de l'arbre A au palier P par l'intermédiaire de ce déflecteur 17.

Le titane ou l'alliage de titane constitutif de la bague contribue à réduire les transmissions d'énergie thermique entre arbre et palier, donc participe aussi à augmenter la durée de vie du palier. Dans l'exemple représenté en figure 2, la bague B permet aussi de caler le déflecteur 16 (qui se positionne entre d'une part la face terminale 21 de la bague dans sa partie supérieure dépassant de l'épaulement 22 de l'arbre ou de toute autre pièce emmanchée sur l'arbre et faisant office de butée axiale pour la bague (B), et d'autre part un second épaulement 25 de l'arbre A, faisant passer son diamètre extérieur du diamètre D2 au diamètre D3.

On ne rentre pas ici dans le détail du montage du palier P à l'arbre A, et au flasque 18, qui, mis à part l'interposition de la bague B, reste standard.

Il peut être prévu de solidariser la bague B à l'arbre A, soit de façon définitive, soit de façon amovible. On peut ainsi remplacer le palier à roulement P quand il est usé, tout en conservant la bague en place autour de l'arbre A, si celle-ci a une durée de vie plus longue que le palier. On garde ainsi un roulement standard, qui est interchangeable sans difficultés.

D'autres modes de réalisation de l'invention sont possibles. Ainsi, on peut envisager que le revêtement 19 soit déposé sur l'arbre A, dans toute la zone destinée à être en contact avec la bague B donc, ici, aussi au niveau de l'épaulement de l'arbre permettant de caler la bague et la zone en contact avec tous les composés métalliques faisant partie du roulement ou de son environnement - déflecteur ou autre- eux-mêmes en contact avec la bague.

## Revendications

1. Dispositif de protection, notamment thermique et/ou vis-à-vis des courants électriques de fuite, d'un palier à roulement (P) destiné à être monté sur un arbre (A) d'un moteur électrique, tel que ledit dispositif de protection comprend une bague (B) présentant une surface intérieure cylindrique constante adaptée au diamètre D1 de l'arbre (A) et une face terminale (21) coopérant avec un épaulement (22) présent au niveau de la surface extérieure de l'arbre (A) faisant passer ledit arbre (A) du diamètre D1 à un diamètre D2 plus grand, la bague (B) étant interposée entre l'arbre et le palier à roulement (P) et étant isolée de l'arbre par un revêtement diélectrique (19), le revêtement diélectrique (19) couvrant au moins la surface (20, 21) de la bague (B) destinée à être en contact avec l'arbre (A), **caractérisé en ce que** la bague (B) est isolée électriquement d'au moins une pièce métallique (17) en contact avec l'arbre A par le revêtement isolant dans la zone destinée à être en contact avec ladite au moins une pièce métallique (17), la face terminale (21) étant plus haute que la différence D2-D1.

2. Dispositif de protection selon la revendication précédente, **caractérisé en ce que** la bague (B) est à base de titane ou d'alliage au titane.

3. Dispositif selon l'une des revendications 1 ou 2, **caractérisé en ce que** le revêtement diélectrique couvre au moins la surface extérieure de l'arbre au moins dans sa zone destinée à être en contact avec la bague.

4. Dispositif de protection selon l'une des revendications précédentes, **caractérisé en ce que** le ou chaque revêtement diélectrique (19) est un revêtement en céramique, notamment en oxyde d'aluminium, en oxyde de titane, en nitrure de silicium ou un mélange d'au moins deux de ces composés.

5. Dispositif de protection selon l'une des revendications précédentes, **caractérisé en ce que** la bague (B) présente une face d'extrémité (21) apte à venir en butée sur un épaulement (22) de l'arbre ou tout autre pièce emmanchée sur l'arbre et faisant office de butée axiale pour la bague (B).

6. Dispositif de protection selon l'une des revendications précédentes, **caractérisé en ce que** la bague (B) est destinée à être bloquée en position sur l'arbre (A) par emmanchement à force.

7. Palier à roulement (P) monté sur un arbre (A) d'un moteur électrique, **caractérisé en ce que** le palier à roulement (P) est équipé du dispositif de protection selon l'une des revendications précédentes.

8. Palier à roulement (P) monté sur un arbre (A) d'un moteur électrique selon la revendication précédente, **caractérisé en ce que** la bague (B) interposée entre l'arbre et le palier à roulement (P) à roulement est isolée de l'arbre par un revêtement isolant sur la surface extérieure de l'arbre au moins dans sa zone destinée à être en contact avec la bague.

9. Palier à roulement (P) monté sur un arbre (A) d'un moteur électrique selon la revendication précédente, **caractérisé en ce que** le revêtement isolant recouvre un épaulement (22) de l'arbre (A) contre lequel une face d'extrémité (21) de la bague est apte à venir en butée.

10. Palier à roulement (P) monté sur un arbre (A) d'un moteur électrique selon l'une des revendications 8 ou 9, **caractérisé en ce que** le revêtement isolant recouvre la surface extérieure de l'arbre (A) destinée à être en contact avec la ou les pièces métalliques (17) du palier à roulement (P).

11. Moteur électrique, **caractérisé en ce qu'**il comporte au moins un palier à roulement (P) selon l'une quelconque des revendications 7 à 10.

## Patentansprüche

1. Vorrichtung zum Schutz, insbesondere thermischem und/oder gegenüber elektrischen Kriechströmen, eines Wälzlagers (P), das vorgesehen ist, auf eine Welle (A) eines elektrischen Motors montiert zu werden, derart, dass die Schutzvorrichtung einen Ring (B) umfasst, der eine zylindrische konstante Innenfläche, die an den Durchmesser D1 der Welle (A) angepasst ist, und eine Stirnfläche (21) aufweist, die mit einer Schulter (22) zusammenarbeitet, die an der Außenfläche der Welle (A) vorhanden ist und die Welle (A) von dem Durchmesser D1 auf einen größeren Durchmesser D2 übergehen lässt, wobei der Ring (B) zwischen der Welle und dem Wälzlager (P) angeordnet ist und von der Welle durch eine dielektrische Beschichtung (19) isoliert ist, wobei die dielektrische Beschichtung (19) mindestens die Fläche (20, 21) des Ringes (B) bedeckt, die vorgesehen ist, in Kontakt mit der Welle (A) zu sein, **dadurch gekennzeichnet, dass** der Ring (B) elektrisch von mindestens einem Metallteil (17) in Kontakt mit der Welle A durch die isolierende Beschichtung in der Zone isoliert ist, die vorgesehen ist, in Kontakt mit dem mindestens einen Metallteil (17) zu sein, wobei die Stirnfläche (21) höher ist als die Differenz D2 - D1.

2. Schutzvorrichtung nach dem vorhergehenden Anspruch, **dadurch gekennzeichnet, dass** der Ring (B) auf Basis von Titan oder einer Titanlegierung hergestellt ist.

3. Vorrichtung nach einem der Ansprüche 1 oder 2, **dadurch gekennzeichnet, dass** die dielektrische Beschichtung mindestens die Außenfläche der Welle mindestens in der Zone bedeckt ist, die vorgesehen ist, in Kontakt mit dem Ring zu sein.

4. Schutzvorrichtung nach einem der vorhergehenden Ansprüche, **dadurch gekennzeichnet, dass** jede dielektrische Beschichtung (19) eine Beschichtung aus Keramik, insbesondere Aluminiumsoxid, Titanoxid, Siliziumsnitrid oder einer Mischung aus mindestens zwei dieser Verbindungen ist.

5. Schutzvorrichtung nach einem der vorhergehenden Ansprüche, **dadurch gekennzeichnet, dass** der Ring (B) eine Stirnfläche (21) aufweist, die geeignet ist, in Anschlag an die Schulter (22) der Welle oder an jedes andere Teil, das auf die Welle gesteckt ist und als axialer Anschlag für den Ring (B) dient, zu kommen.

6. Schutzvorrichtung nach einem der vorhergehenden Ansprüche, **dadurch gekennzeichnet, dass** der Ring (B) vorgesehen ist, in Position auf der Welle (A) durch eine Presspassung festgelegt zu werden.

7. Wälzlager (P), das auf eine Welle (A) eines elektrischen Motors montiert ist, **dadurch gekennzeichnet, dass** das Wälzlager (P) mit einer Schutzvorrichtung nach einem der vorhergehenden Ansprüche ausgerüstet ist.

8. Wälzlager (P), das auf eine Welle (A) eines elektrischen Motors montiert ist, nach dem vorhergehenden Anspruch, **dadurch gekennzeichnet, dass** der Ring (B), der zwischen der Welle und dem Wälzlager (P) angeordnet ist, von der Welle durch eine isolierende Beschichtung auf der Außenfläche der Welle zumindest in der für einen Kontakt mit dem Ring vorgesehenen Zone isoliert ist.

9. Wälzlager (P), das auf eine Welle (A) eines elektrischen Motors montiert ist, nach dem vorhergehenden Anspruch, **dadurch gekennzeichnet, dass** die isolierende Beschichtung einer Schulter (22) der Welle (A) bedeckt, gegen die eine Stirnfläche (21) des Ringes geeignet ist, in Anschlag zu kommen.

10. Wälzlager (P), das auf einer Welle (A) eines elektrischen Motors montiert ist, nach einem der Ansprüche 8 oder 9, **dadurch gekennzeichnet, dass** die isolierende Beschichtung die Außenfläche der Welle (A) bedeckt, die vorgesehen ist, in Kontakt mit dem oder den Metallteilen (17) des Wälzlagers (P) zu kommen.

11. Elektrischer Motor, **dadurch gekennzeichnet, dass** er mindestens einen Wälzlager (P) nach einem beliebigen der Ansprüche 7 bis 10 aufweist.

## Claims

1. Protection device, especially thermal and/or against electric leakage currents, for a rolling bearing (P) which is to be mounted on a shaft (A) of an electric motor, such that said protection device comprises a ring (B) having a constant cylindrical inner surface adapted to the diameter (D1) of the shaft (A) and a terminal face (21) which cooperates with a shoulder (22) that is present at the outer surface of the shaft (A) and causes said shaft (A) to change from diameter D1 to a larger diameter D2, the ring (B) being interposed between the shaft and the rolling bearing (P) and being insulated from the shaft by a dielectric coating (19), the dielectric coating (19) covering at least the surface (20, 21) of the ring (B) that is to be in contact with the shaft (A), **characterised in that** the ring (B) is electrically insulated from at least one metal part (17) in contact with the shaft A by the insulating coating in the zone that is to be in contact with said at least one metal part (17), the terminal face (21) being higher than the difference D2-D1.

2. Protection device according to the preceding claim, **characterised in that** the ring (B) is based on titanium or titanium alloy.

3. Device according to either claim 1 or claim 2, **characterised in that** the dielectric coating covers at least the outer surface of the shaft at least in its zone that is to be in contact with the ring.

4. Protection device according to any one of the preceding claims, **characterised in that** the or each dielectric coating (19) is a coating of ceramics, especially of aluminium oxide, of titanium oxide, of silicon nitride or of a mixture of at least two of those compounds.

5. Protection device according to any one of the preceding claims, **characterised in that** the ring (B) has an end face (21) capable of coming into abutment on a shoulder (22) of the shaft or any other part that is fitted onto the shaft and acts as an axial stop for the ring (B).

6. Protection device according to any one of the preceding claims, **characterised in that** the ring (B) is to be blocked in position on the shaft (A) by press fitting.

7. Rolling bearing (P) mounted on a shaft (A) of an electric motor, **characterised in that** the rolling bearing (P) is equipped with the protection device according to any one of the preceding claims.

8. Rolling bearing (P) mounted on a shaft (A) of an electric motor according to the preceding claim, **characterised in that** the ring (B) interposed between the shaft and the rolling bearing (P) is insulated from the shaft by an insulating coating on the outer surface of the shaft at least in its zone that is to be in contact with the ring.

9. Rolling bearing (P) mounted on a shaft (A) of an electric motor according to the preceding claim, **characterised in that** the insulating coating covers a shoulder (22) of the shaft (A) against which an end face (21) of the ring is capable of coming into abutment.

10. Rolling bearing (P) mounted on a shaft (A) of an electric motor according to either claim 8 or claim 9, **characterised in that** the insulating coating covers the outer surface of the shaft (A) that is to be in contact with the metal part(s) (17) of the rolling bearing (P).

11. Electric motor, **characterised in that** it comprises at least one rolling bearing (P) according to any one of claims 7 to 10.
